(19) Europäisches Patentamt
European Patent Office
Office européen des brevets

(11) **EP 4 620 718 A1**

(12) **EUROPEAN PATENT APPLICATION**

(43) Date of publication:
24.09.2025 Bulletin 2025/39

(21) Application number: 25155839.1

(22) Date of filing: 04.02.2025

(51) International Patent Classification (IPC):
**B60L 3/10** (2006.01)   **B60L 15/20** (2006.01)
**B60W 20/00** (2016.01)

(52) Cooperative Patent Classification (CPC):
**B60L 15/20; B60L 3/10; B60L 3/106; B60W 20/00;**
B60L 2240/423; B60L 2240/429; B60L 2240/465;
B60L 2240/48

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.02.2024 JP 2024025240

(71) Applicant: **TOYOTA JIDOSHA KABUSHIKI
KAISHA**
**Aichi-Ken 471-8571 (JP)**

(72) Inventor: **YAMAGUCHI, Takuya
Toyota-shi, Aichi-ken, 471-8571 (JP)**

(74) Representative: **Winter, Brandl - Partnerschaft
mbB**
**Alois-Steinecker-Straße 22
85354 Freising (DE)**

(54) **CONTROL SYSTEM FOR ELECTRIC VEHICLE**

(57)    A control system for an electric vehicle (Ve) configured to promptly detect a wheel slip. The electric vehicle (Ve) comprises a motor (2), a driveshaft (6) connected to the motor (2), and a wheel (1) connected to the driveshaft (6). A controller (13) is configured to: calculate an actual torque (Tds) acting on the driveshaft (6) based on a value obtained by subtracting an inertia torque of the motor (2) from an actual torque (Tm_act) generated by the motor (2); and determine a slip of the wheel (1) when a value obtained by subtracting the driveshaft torque (Tds) from a torque delivered to the driveshaft (6) from the motor (2) in accordance with a command torque (Tm_com) for controlling the motor (2) is greater than a predetermined torque (A).

## FIG.1

## Description

## CROSS-REFERENCE TO RELATED APPLICATIONS

The present invention claims the benefit of Japanese Patent Application No. 2024-025240 filed on February 22, 2024 with the Japanese
Patent Office.

## BACKGROUND

## Field of the Invention

Embodiments of the present invention relate to the art of a control system for an electric vehicle having an electric motor serving as a prime mover.

## Discussion of the Related Art

In a situation where a vehicle drives over a bump, at least one of wheels slips or spins freely, and then comes into contact with the ground again. In this situation, a reaction force acting on the slipping wheel decreases thereby increasing a rotational speed of the slipping wheel, and a rotational speed of a prime mover is increased after such increase in the rotational speed of the slipping wheel. Consequently, a driveshaft is twisted by such increase in the rotational speed of the slipping wheel. In addition, since the rotational speed of the wheel spinning freely is higher than a rotational speed corresponding to a vehicle speed, the rotational speed of the wheel spinning freely is reduced abruptly when the wheel comes into contact with the ground again. In this situation, therefore, the driveshaft is also twisted by such reduction in the rotational speed of the wheel coming into contact with the ground again.

JP-A-2008-64037 describes a vehicular slip detecting device for detecting a wheel slip to suppress vibrations and to limit damages on parts resulting from such torsion of the driveshaft. The detecting device taught by JP-A-2008-64037 is configured to integrate an increasing rate of an engine speed within a period from a point at which the increasing rate exceeds a first threshold value to a point at which the increasing rate falls below the first threshold value, and to determine an occurrence of a wheel slip when an integrated value of the increasing rate exceeds a second threshold value.

JP-A-2020-145863 describes a drive control device for an electric vehicle having a motor serving as a prime mover. In an inertia system, a magnitude of inertia of a tire being in contact with the ground and a magnitude of inertia of a tire spinning freely are different. Therefore, the drive control device taught by JP-A-2020-145863 is configured to: extract a predetermined frequency component of a detected rotational speed of the motor; and determine a slip of the tire based on the frequency component.

JP-A-2021-167139 also describes a drive control device for an electric vehicle having a motor serving as a prime mover. The drive control device taught by JP-A-2021-167139 is configured to: determine a fluctuation of a motor speed resulting from vibration of a transmission mechanism transmitting motor torque to a tire; calculates a rotational jerk of the motor by differentiating the fluctuating motor speed two times; and determine a slip of the tire if the calculated rotational jerk is positive value.

As described, the detecting device taught by JP-A-2008-64037 determines a wheel slip when the integrated value of the increasing rate of the engine speed within the period from the point at which the increasing rate exceeds a first threshold value to the point at which the increasing rate falls below the first threshold value exceeds the second threshold value. However, even if the wheel slips, the detecting device taught by JP-A-2008-64037 does not determine a wheel slip until the integrated value of the increasing rate of the engine speed exceeds the second threshold value. According to the teachings of JP-A-2008-64037, therefore, an anti-slip control will not be executed until a wheel slip is determined. Consequently, vibrations are generated by a torsion of the driveshaft, and parts including the driveshaft may be damaged.

## SUMMARY

Aspects of embodiments of the present invention have been conceived noting the foregoing technical problems, and it is therefore an object of the present invention to provide a control system for an electric vehicle configured to promptly detect a wheel slip.

The control system according to the exemplary embodiment of the present invention is applied to an electric vehicle having a motor serving as a prime mover, a driveshaft connected to the motor, and a wheel connected to one end of the driveshaft. In order to achieve the above-explained objective, the control system is provided with a controller for that controlling the motor. Specifically, the controller comprises: a torque calculator that is configured to calculate a driveshaft torque acting on the driveshaft; and a slip determiner that is configured to determine a slip of the wheel when a value obtained by subtracting the driveshaft torque from a torque delivered to the driveshaft from the motor in accordance with a command torque for controlling the motor is greater than a predetermined torque.

In a non-limiting embodiment, the torque calculator may be further configured to calculate the driveshaft torque based on a value obtained by subtracting an inertia torque of the motor from an actual torque generated by the motor.

In a non-limiting embodiment, the slip determiner may be further configured to determine the slip of the wheel when a change rate of the driveshaft torque is greater than a predetermined change rate.

In a non-limiting embodiment, the slip determiner may be further configured to determine a slip of the wheel when a change rate of a torsional angle of the driveshaft is greater than another predetermined change rate.

In a non-limiting embodiment, the slip determiner may be further configured to determine a slip of the wheel when an angular acceleration of the wheel is greater than a predetermined angular acceleration.

In a non-limiting embodiment, the control system may further comprise an ammeter that measures an electric current flowing through the motor. In addition, the torque calculator may be further configured to calculate the actual torque generated by the motor based on a current value of the electric current measured by the ammeter.

In a non-limiting embodiment, the control system may further comprise a sensor that detects a rotational angle of the motor. In addition, the torque calculator may be further configured to calculate the inertia torque of the motor based on: the angular acceleration of the motor calculated based on the rotational angle of the motor detected by the sensor; and an inertia moment of the motor.

In a non-limiting embodiment, the controller may further comprise: a limit torque calculator that is configured to calculate a limit command torque for controlling the motor to generate a torque possible to restrict the angular acceleration of the wheel to be equal or less than a limit angular acceleration; and a command torque selector that is configured to select the limit command torque calculated by the limit torque calculator as the command torque for controlling the motor, when the slip determiner determines the slip of the wheel.

In a non-limiting embodiment, the limit torque calculator may comprise: an angular acceleration selector that is configured to select smaller one of an actual angular acceleration of the wheel and the limit angular acceleration; and a feedback controller that is configured to calculate the limit command torque based on a difference between: a target rotational speed of the wheel calculated based on the smaller one of the angular accelerations selected by the angular acceleration selector; and an actual rotational speed of the wheel.

As described, in the electric vehicle to which the control system according to the exemplary embodiment of the present invention is applied, the motor is connected to the wheel through the driveshaft. Therefore, when the wheel slips, a friction force acting between the wheel and a road surface is reduced thereby increasing a rotational speed of the wheel. Consequently, a rotational speed of the motor is increased. In this situation, an electromotive force in the motor is increased and a voltage supplied to the motor is reduced. That is, an electric current flowing through the motor is reduced and hence the actual torque generated by the motor is reduced. Whereas, the inertia torque of the motor is increased by an increase in the angular acceleration of the motor. That is, the driveshaft torque is changed significantly by the slip of the wheel. According to the exemplary embodiment of the present invention, therefore, the control system calculates the driveshaft torque, and determines a slip of the wheel when the value obtained by subtracting the driveshaft torque from the torque delivered to the driveshaft from the motor in accordance with the command torque for controlling the motor is greater than the predetermined torque. For this reason, a slip of the wheel may be determined promptly.

**BRIEF DESCRIPTION OF THE DRAWINGS**

Features, aspects, and advantages of exemplary embodiments of the present invention will become better understood with reference to the following description and accompanying drawings, which should not limit the invention in any way.

Fig. 1 is a schematic illustration showing one example of a structure of an electric vehicle to which the control system according to the exemplary embodiment of the present invention is applied;
Fig. 2 is a schematic illustration showing a structure to connect a motor to a wheel;
Fig. 3 is a block diagram showing constituent elements of a controller;
Fig. 4 is a block diagram showing a procedure to calculate a driveshaft torque by a torque calculator;
Fig. 5 is a time chart showing one example of a change in the driveshaft torque calculated by the torque calculator in the situation where the vehicle travels on an uneven road and a command torque for controlling the motor is constant;
Fig. 6 is a block diagram showing a procedure to calculate a limit command torque by a limit torque calculator;
Fig. 7 is a block diagram showing a procedure to calculate the command torque by a command torque selector;
Fig. 8 is a flowchart showing one example of a routine executed by the control system according to the exemplary embodiment of the present invention;
Fig. 9 is a time chart showing a change in a rotational speed of the wheel during execution of the routine shown in Fig. 8;
Fig. 10 is a block diagram showing a procedure to determine a slip of the wheel by a slip determiner based on a change rate of a torsional angle of the driveshaft;
Fig. 11 is a block diagram showing a procedure to calculate a change rate of a torsional angle of the driveshaft by a change rate calculator; and
Fig. 12 is a block diagram showing a procedure to determine a slip of the wheel by the slip determiner based on a speed of the wheel.

## DETAILED DESCRIPTION OF THE PREFERRED EMBODIMENT(S)

Embodiments of the present invention will now be explained with reference to the accompanying drawings. Note that the embodiments shown below are merely examples of the present invention which should not limit a scope of the present invention.

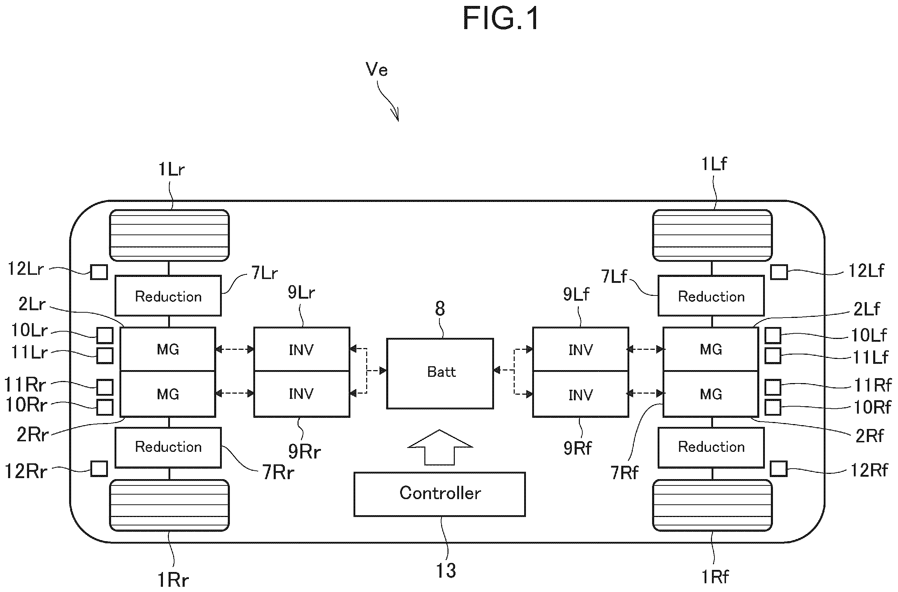

Referring now to Fig. 1, there is shown one example of a structure of an electric vehicle (hereinafter simply referred to as a vehicle) Ve to which the control system according to the embodiment of the present invention is applied. The vehicle Ve shown in Fig. 1 is a four-wheel drive layout electric vehicle in which a right front motor 2Rf is connected to a right front wheel 1Rf, a left front motor 2Lf is connected to a left front wheel 1Lf, a right rear motor 2Rr is connected to a right rear wheel 1Rr, and a left rear motor 2Lr is connected to a left rear wheel 1Lr. Those motors 2Rf, 2Lf, 2Rr, and 2Lr are individually fixed to (or supported by) a vehicle body. That is, the vehicle Ve shown in Fig. 1 is an in-board type electric vehicle. Nonetheless, the control system according to the exemplary embodiment of the present invention may also be applied to an in-wheel type electric vehicle in which motors are arranged in the respective wheels. In addition, the control system according to the exemplary embodiment of the present invention may also be applied to a front-wheel drive layout electric vehicle in which the right front motor 2Rf is connected to the right front wheel 1 Rf and the left front motor 2Lf is connected to the left front wheel 1Lf, and a rear-wheel drive layout electric vehicle in which the right rear motor 2Rr is connected to the right rear wheel 1Rr and the left rear motor 2Lr is connected to the left rear wheel 1Lr.

As the conventional motor/generators employed in electric vehicles and hybrid vehicles, each of the motors 2Rf, 2Lf, 2Rr, and 2Lr serves as a motor to generate a drive torque when energized, and as a generator to translate an output power thereof into an electric power at least partially when an output shaft (i.e., a rotor shaft) thereof is rotated passively. For example, a permanent magnet synchronous motor and an induction motor may be adopted as the motors 2Rf, 2Lf, 2Rr, and 2Lr.

In the vehicle Ve shown in Fig. 1, each of the motors 2Rf, 2Lf, 2Rr, and 2Lr is individually connected to the wheels 1 Rf, 1Lf, 1Rr, and 1Lr through a common connection mechanism. Therefore, the wheels 1Rf, 1Lf, 1Rr, and 1Lr will also be commonly referred to as the wheel 1, and the motors 2Rf, 2Lf, 2Rr, and 2Lr will also be commonly referred to as the motor 2. That is, in the descriptions, the reference character "R" indicates the right position, the reference character "L" indicates the left position, reference character "f" indicates the front position, and the reference character "r" indicates the rear position.

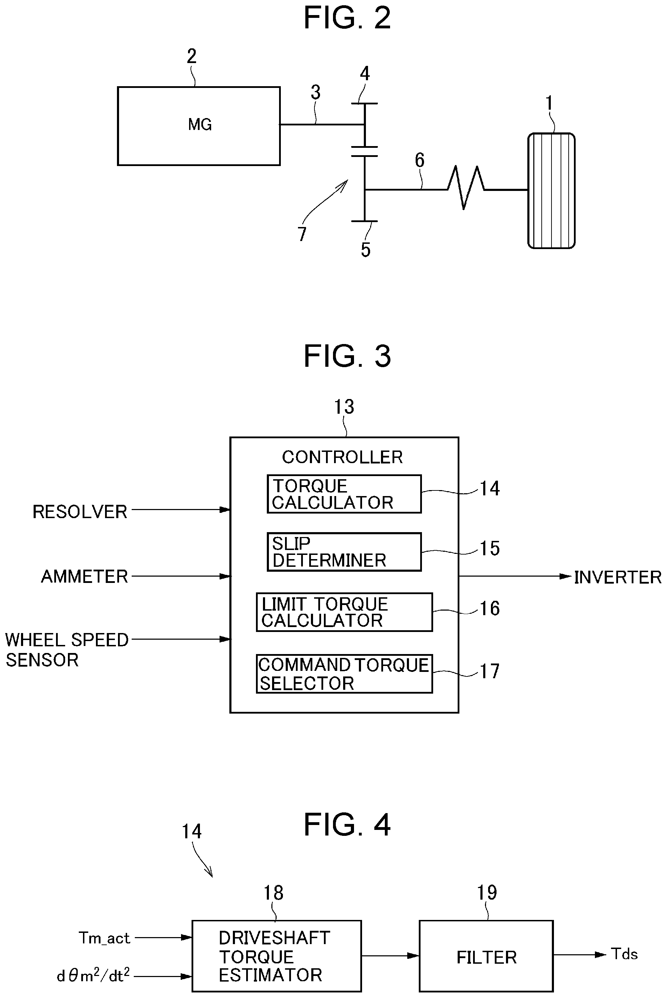

The mechanism connecting the motor 2 to the wheel 1 is shown in Fig.2. As illustrated in Fig. 2, a drive gear 4 as an external gear is mounted on an output shaft 3 of the motor 2, and the drive gear 4 is meshed with a driven gear 5 that is mounted on one end of a driveshaft 6. The driven gear 5 is diametrically larger than the drive gear 4, that is, the number of teeth of the driven gear 5 is larger than the number of teeth of the drive gear 4, and the other end of the driveshaft 6 is connected to the wheel 1. Therefore, a rotational speed of the motor 2 is reduced and an output torque of the motor 2 delivered to the wheel 1 is multiplied in accordance with a ratio of the number of teeth of the drive gear 4. Thus, the drive gear 4 and the driven gear 5 serve as a reduction mechanism 7.

The vehicle Ve is provided with an electric storage device (referred to as Batt in Fig. 1) 8 and an inverter (referred to as INV in Fig. 1) 9. As in the conventional electric vehicles and hybrid vehicles, a secondary battery including an all-solid-state battery such as a lithium-ion battery and a nickel-hydride battery may be adopted as the electric storage device 8. The inverter 9 includes a plurality of transistors and a plurality of diodes, and the inverter 9 supplies an electric power to the motor 2 while translating a direct current supplied from the electric storage device 8 into an alternate current by controlling switching signals of the transistors.

As illustrated in Fig. 1, various sensors are arranged in the vehicle Ve. Specifically, the sensors include a resolver 10 that detects a rotational angle of the motor 2, an ammeter 11 that measures an electric current flowing through a coil of the motor 2, and a wheel speed sensor 12 that detects a rotational speed of the wheel 1. Detection signals are transmitted from the sensors 10, 11, and 12 to a controller 13 as an electronic control unit.

As the controllers arranged in the conventional vehicles, the controller 13 comprises a microcomputer configured to determine target values of e.g., a torque and a speed of the motor 2 based on incident signals transmitted thereto from the sensors 12 using formulas installed in advance and with reference to maps also installed in advance. The target values calculated by the controller 13 are transmitted to the inverter 9 in the form of command signals.

Specifically, the controller 13 is configured to determine a slip or free spin of the wheel 1, and to control the motor 2 to prevent an increase in a rotational speed of the slipping wheel 1. For these purposes, as illustrated in Fig. 3, the controller 13 comprises a torque calculator 14, a slip determiner 15, a limit torque calculator 16, and a command torque selector 17.

The torque calculator 14 is configured to estimate a torque Tds acting on the driveshaft 6 (hereinafter referred to as the driveshaft torque) based on an actual output torque Tm_act of the motor 2 (hereinafter referred to as the actual torque) and an angular acceleration $d\theta m^2/dt^2$ of the motor 2. Specifically, as illustrated in Fiig. 4, the torque calculator 14 comprises a driveshaft torque estimator 18 and a filter 19. In the driveshaft torque estimator 18, the following formula (1)

$$Tds = Gr(Tm\_act - Im \cdot d\theta m^{\wedge}2/dt^{\wedge}2)$$

is installed.

In the formula (1), Gr is a gear ratio of the reduction mechanism 7, and Im is an inertia moment governed by a structure of the motor 2. When the wheel 1 slips or spins freely and a rotational speed of the wheel 1 increases, a rotational angle of the rotor of the motor 2 may be changed from an intended angle. In this situation, the actual torque Tm_act generated by the motor 2 may differ from a command torque Tm_com for controlling the motor 2. Therefore, the actual torque Tm_act is calculated based on a current value measured by the ammeter 11 of the motor 2. The angular acceleration $d\theta m^{\wedge}2/dt^{\wedge}2$ of the motor 2 may be calculated by differentiating a rotational angle $\theta m$ of the motor 2 detected by the resolver 10 two times. Thus, the driveshaft torque Tds is calculated based on the actual torque Tm_act generated by the motor 2 and an inertia torque of the motor 2 using the formula (1). However, the driveshaft torque Tds calculated by the above-explained procedures may contain a noise. Therefore, torque calculator 14 is provided with the filter 19 such as a low-pass filter for gradually reducing a higher frequency content than a predetermined frequency.

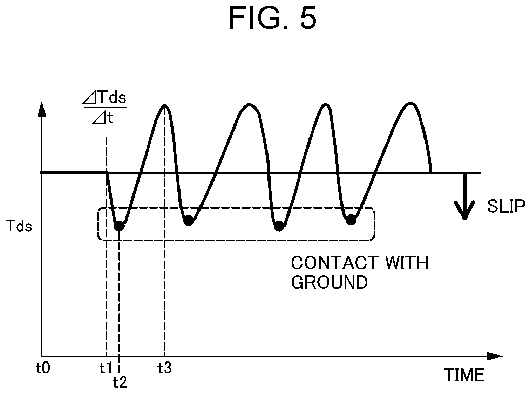

Fig. 5 shows an example of a temporal change in the driveshaft torque Tds calculated by the torque calculator 14 in the situation where the vehicle Ve travels on an uneven road or a bumpy road while maintaining the command torque Tm_com for controlling the motor 2 to a constant value. At point t0, the vehicle Ve travels on a flat road and hence a torque acting on the driveshaft 6 is constant in this situation.

At point t1, one of the wheels 1 starts spinning freely, and a friction force acting between the wheel 1 spinning freely and a road surface which prevents an increase in a rotational speed of said wheel 1 starts decreasing. Consequently, a reaction torque counteracting the torque of the motor 2 connected to the wheel 1 spinning freely is reduced. In this situation, therefore, a rotational speed of the wheel 1 spinning freely increases, and a rotational speed of the motor 2 connected to the wheel 1 spinning freely is increased by such increase in the rotational speed of the wheel 1. That is, the angular acceleration $d\theta m^{\wedge}2/dt^{\wedge}2$ of the motor 2 connected to the wheel 1 spinning freely is increased. As a result, the driveshaft torque Tds starts decreasing from point t1.

At point t2, the wheel 1 spinning freely comes into contact with the ground again so that the friction force is established between the road surface and the wheel 1 in the direction to reduce the rotational speed of the wheel 1 which has been increased due to the slippage. Consequently, the rotational speed of the wheel 1 coming into contact with the ground is reduced abruptly, and the rotational speed of the motor 2 connected to the wheel 1 coming into contact with the ground is reduced by such reduction in the rotational speed of the wheel 1. That is,

the angular acceleration $d\theta m^{\wedge}2/dt^{\wedge}2$ of the motor 2 is changed to a negative value. As a result, the driveshaft torque Tds starts increasing from point t2.

When the rotational speed of the motor 2 connected to the wheel 1 coming into contact with the ground is reduced to a speed corresponding to the rotational speed of the wheel 1 rotating without slippage, the rotational speed of the motor 2 becomes constant. That is, the angular acceleration $d\theta m^{\wedge}2/dt^{\wedge}2$ of the motor 2 is reduced to zero. In this situation, therefore, a torque corresponding to the command torque Tm_com is applied from the motor 2 to the driveshaft 6. Consequently, the driveshaft 6 having a predetermined resilient modulus is twisted so that an elastic torque is established by the driveshaft 6 in a direction to eliminate torsion on the driveshaft 6. That is, the driveshaft torque Tds is pulsated. As a result, the driveshaft torque Tds is reduced from point t3 by the elastic torque of the driveshaft 6.

Thus, the driveshaft torque Tds is pulsated by the repetition of the slip of the wheel 1 and contact of the wheel 1 with the ground, and the elastic torque established by the driveshaft 6.

The slip determiner 15 is configured to determine a slip (or free spin) of the wheel 1 based on a change in the driveshaft torque Tds. Specifically, the slip determiner 15 is configured to determine a slip of the wheel 1 based on a torsion of the driveshaft 6 and an abrupt change in the driveshaft torque Tds. To this end, the slip determiner 15 determines a torsion of the driveshaft 6 upon the satisfaction of the following inequality (2)

$$|\,Tm\_com \cdot Gr - Tds\,| > A,$$

and
determines an abrupt change in the driveshaft torque Tds upon the satisfaction of the following inequality (3)

$$|\,\Delta Tds/\Delta t\,| > B.$$

In the above inequality (2), "A" is a threshold for determining a torsion on the driveshaft 6. The threshold A as a predetermined torque of the exemplary embodiment of the present invention may be a fixed value set based on e.g., an experimental result. Alternatively, the threshold A may also be a variable which varies in accordance with the command torque Tm_com and a speed of the vehicle Ve. On the other hand, in the above inequality (3), "B" is a threshold for determining a change in the torque of the driveshaft 6 resulting from a slippage of the wheel 1. The threshold B as a predetermined change rate of the exemplary embodiment of the present invention may be a fixed value set based on e.g., an experimental result. Alternatively, the threshold B may also be a variable which varies in accordance with the command torque Tm_com and a speed of the vehicle Ve. For example, the threshold B may be set to a value greater than a change rate of the torque of the driveshaft 6 in the situation where the vehicle Ve is accelerated or decelerated abruptly.

In the above inequality (3), $\Delta t$ is an operation cycle (or period), and $\Delta$Tds is a difference between: a driveshaft torque Tds(n-1) obtained in a previous operation cycle; and a driveshaft torque Tds(n) obtained in a current operation cycle. Accordingly, $\Delta$Tds/$\Delta$t is a value obtained by dividing the difference $\Delta$Tds by the operation cycle $\Delta$t. That is, $\Delta$Tds/$\Delta$t is a change rate of the driveshaft torque Tds. In the above inequality (2), Tm_com is a command torque calculated in the previous operation cycle at step S3 or step S6 of the after-mentioned routine.

The slip determiner 15 is further configured to determine that the wheel 1 spinning freely comes into contact with the ground again. Specifically, the slip determiner 15 determines that the wheel 1 spinning freely comes into contact with the ground again upon the satisfaction of both of the following inequality (4)

$$| \text{Tm\_com} \cdot \text{Gr-Tds} | < C,$$

and the following inequality (5)

$$| \Delta \text{Tds}/\Delta \text{t} | < D.$$

In the above inequalities (4) and (5), "C" and "D" are thresholds for determining that the wheel 1 spinning freely comes into contact with the ground again. Each of the thresholds C and D may be a fixed value set based on e.g., an experimental result. Alternatively, each of the thresholds C and D may also be a variable which varies in accordance with the command torque Tm_com and a speed of the vehicle Ve. When the wheel 1 spinning freely comes into contact with the ground again, the torque acting on the driveshaft 6 in accordance with the command torque Tm_com is changed to a substantially same magnitude as the driveshaft torque Tds estimated by the torque calculator 14. Therefore, in order to determine whether the torsion on the driveshaft 6 is eliminated, the slip determiner 15 executes the comparison expressed by the inequality (4). Accordingly, the threshold C may be set to the same value as the threshold A, but to a different value from the threshold A. Specifically, when the wheel 1 spinning freely starts touching the ground again, the friction force established between the wheel 1 and the road surface acts as a resistance torque on the driveshaft 6 to suppress the pulsation of the torque of the driveshaft 6 resulting from a torsion of the driveshaft 6. As a result, the change rate of the driveshaft torque Tds is reduced. Therefore, the slip determiner 15 executes the comparison expressed by the inequality (5). To this end, for example, the threshold D may be set to a value smaller than the threshold B.

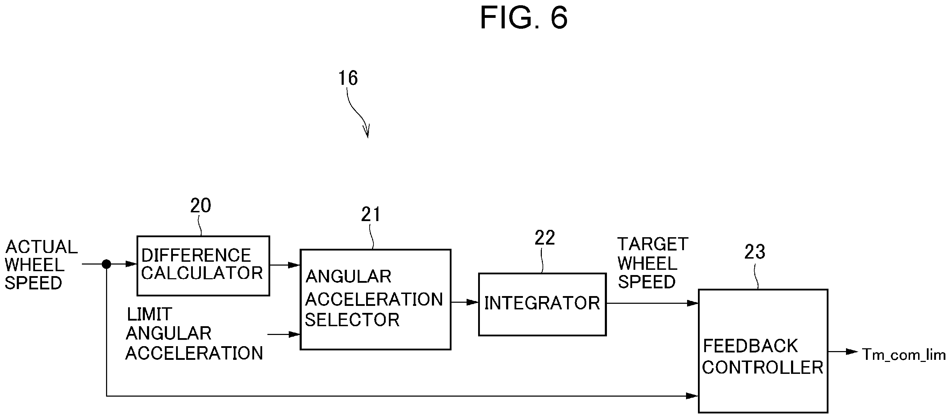

The limit torque calculator 16 is configured to calculate a torque of the motor 2 for preventing an increase in a rotational speed of the wheel 1 due to slippage of the wheel 1. Specifically, as shown in Fig. 6, the limit torque calculator 16 comprises a difference calculator 20, an angular acceleration selector 21, an integrator 22, and a feedback controller 23.

The difference calculator 20 is configured to calculate a rotational acceleration (i.e., an angular acceleration) of the wheel 1 based on a difference between: an actual rotational speed of the wheel 1 in the previous operation cycle detected by the wheel speed sensor 12; and an actual rotational speed of the wheel 1 in the current operation cycle detected by the wheel speed sensor 12.

The angular acceleration selector 21 is configured to select (or set) an angular acceleration of the wheel 1 for preventing an increase in the rotational speed of the wheel 1. To this end, the rotational acceleration of the wheel 1 calculated by the difference calculator 20 (hereinafter referred to as the actual angular acceleration), and a predetermined limit angular acceleration set as an upper limit value of an angular acceleration of the wheel 1 are transmitted to the angular acceleration selector 21. That is, the angular acceleration selector 21 selects the smaller of the actual angular acceleration of the wheel 1 and the limit angular acceleration as an upper limit angular acceleration of the wheel 1 to prevent an increase in the rotational speed of the wheel 1. In other words, the angular acceleration selector 21 is configured to set a guard value of the angular acceleration of the wheel 1.

The integrator 22 is configured to set a target speed of the wheel 1 by integrating the angular acceleration selected by the angular acceleration selector 21.

The feedback controller 23 is configured to set a limit command torque Tm_com_lim for controlling the motor 2 to generate a torque possible to restrict the angular acceleration of the wheel 1 less than a limit angular acceleration. To this end, the feedback controller 23 calculates a feedback torque to adjust an actual rotational speed of the wheel 1 to a target rotational speed by: calculating a difference between the target rotational speed and the actual rotational speed of the wheel 1; differentiating the difference between the target rotational speed and the actual rotational speed of the wheel 1; and multiplying an obtained differential value by an inertia moment of the motor 2. On the other hand, a drive torque calculator (not shown) of the controller 13 calculates a required drive torque (or drive force) to propel the vehicle Ve based on a position of an accelerator pedal (not shown) and a speed of the vehicle Ve. Then, the feedback controller 23 calculates the limit command torque Tm_com_lim for controlling the motor 2 by adding the feedback torque calculated by the above-explained procedures to a required torque Tm_com_req to be generated by the motor 2 to achieve the required drive torque calculated by the drive torque calculator.

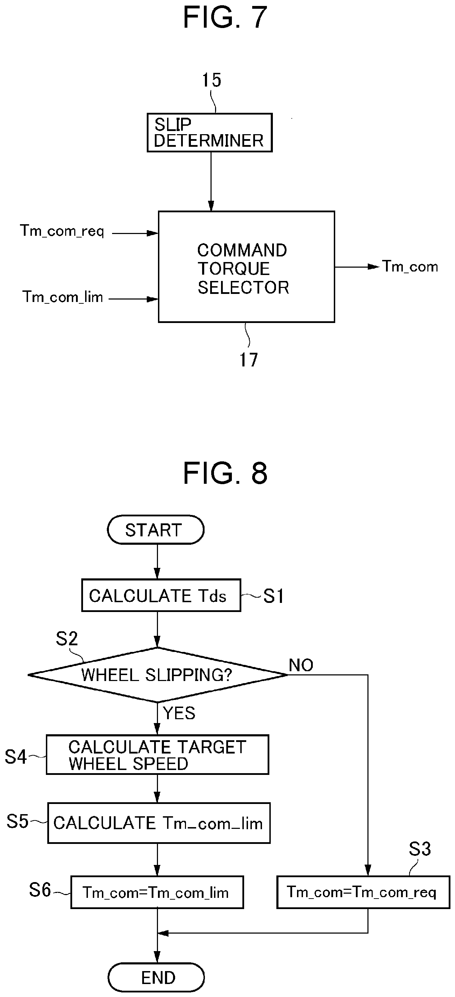

The command torque selector 17 is configured to select (or calculate) the command torque for controlling the motor 2 depending on an occurrence of a slip of the wheel 1. To this end, as shown in Fig. 7, a signal representing the occurrence of a slip of the wheel 1 or a signal representing the non-occurrence of a slip of the wheel 1 is transmitted from the slip determiner 15 to the command torque selector 17. In addition, the required torque Tm_com_req is transmitted from the drive torque calculator to the command torque selector 17, and the limit command torque Tm_com_lim is transmitted from the limit torque calculator 16 to the command torque selector 17. In a case that the signal representing the occurrence of a slip of the wheel 1 is transmitted from the slip determiner 15 to the command torque selector 17, the command torque selector 17 selects the limit command torque Tm_com_lim as the command torque Tm_com and transmits it to the motor 2. Whereas, in a case that the signal representing the non-occurrence of a slip of the wheel 1 is transmitted from the slip determiner 15 to the command torque selector 17, the command torque selector 17 selects the required torque Tm_com_req as the command torque Tm_com and transmits it to the motor 2.

In addition, the controller 13 is further configured to execute a switching control of the inverter 9 based on the command torque Tm_com transmitted thereto from the command torque selector 17.

Turning to Fig. 8, there is shown one example of a routine executed by the control system according to the exemplary embodiment of the present invention. At step S1, the driveshaft torque Tds of the driveshaft 6 is calculated by the torque calculator 14 based on the actual torque Tm_act generated by the motor 2 and the inertia torque of the motor 2 established in accordance with the angular acceleration $d\theta m^2/dt^2$ of the motor 2. It is to be noted that, at step S1, the driveshaft torque Tds of each of the driveshafts 6 is calculated.

Then, it is determined at step S2 whether any of the wheels 1 is/are slipping or spinning freely. Specifically, the slip determiner 15 determines whether the above-mentioned inequalities (2) and (3) are satisfied. At step S2, such determination of the occurrence of a slip is made for each of the wheels 1.

If none of the wheels 1 is slipping nor spinning freely so that the answer of step S2 is NO, the routine progresses to step S3. At step S3, the command torque selector 17 selects the required torque Tm_com_req transmitted thereto from the drive torque calculator as the command torque Tm_com, and transmits it to each of the motors 2. Thereafter, the routine returns.

By contrast, if any of the wheels 1 is/are slipping or spinning freely so that the answer of step S2 is YES, the feedback controller 23 calculates the limit command torque Tm_com_lim for controlling the motor 2 connected to the slipping wheel 1. To this end, the routine progresses to step S4 to calculate a target speed of the slipping wheel 1. Specifically, as explained above, the difference calculator 20 calculates an actual angular acceleration of the slipping wheel 1, the angular acceleration selector 21 selects the smaller of the actual angular acceleration of the slipping wheel 1 and the limit angular acceleration, and the integrator 22 calculates the target speed of the slipping wheel 1 based on the angular acceleration selected by the angular acceleration selector 21. Thereafter, the routine progresses to step S5 to calculate the limit command torque Tm_com_lim by the feedback controller 23 based on: a difference between the target rotational speed and the actual rotational speed of the slipping wheel 1; and the required torque Tm_com_req to be generated by the motor 2 connected to the slipping wheel 1.

Then, at step S6, the command torque selector 17 selects the limit command torque Tm_com_lim calculated at step S5 as the command torque Tm_com, and transmits it to the motor 2 connected to the slipping wheel 1. Thereafter, the routine returns.

Thus, in the foregoing example, the occurrence of a slip of the wheel 1 is determined prior to calculate the limit command torque Tm_com_lim. However, the occurrence of a slip of the wheel 1 may also be determined after calculating the limit command torque Tm_com_lim. In this case, the command torque Tm_com may be selected from the required torque Tm_com_req and the limit command torque Tm_com_lim based on a determination result of the occurrence of a slip of the wheel 1.

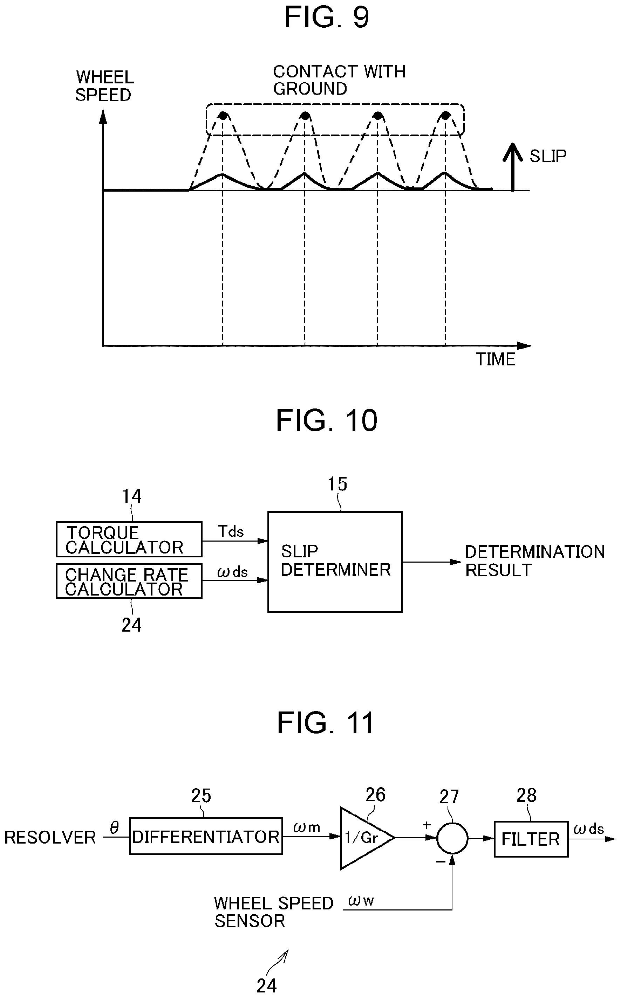

Turning to Fig. 9, there are shown a change in a rotational speed of the wheel 1 of a case in which the vehicle Ve travels on an uneven road while executing the routine shown in Fig. 8, and a change in a rotational speed of the wheel 1 of a case in which the vehicle Ve travels on an uneven road without executing the routine shown in Fig. 8. In the case of executing the routine shown in Fig. 8, the limit command torque Tm_com_lim is calculated immediately when the driveshaft torque Tds is changed due to a slip of the wheel 1, and is selected as the command torque Tm_com. As described, the limit command torque Tm_com_lim is a command for controlling the motor 2 to generate a torque possible to restrict the angular acceleration of the slipping wheel 1 less than the limit angular acceleration so as to suppress a change in a speed of the slipping wheel 1. In this situation, therefore, the command torque Tm_com for controlling the motor 2 is reduced immediately. Consequently, even if the reaction torque applied from the road surface to the slipping wheel 1 in the direction to reduce the rotational speed of the wheel 1 is reduced due to a slip of the wheel 1, the torque delivered from the motor 2 to the slipping wheel 1 is restricted. For this reason, as indicated by the solid curve in Fig. 9, an increase in the rotational speed of the slipping wheel 1 is suppressed.

Whereas, in the case that the vehicle Ve travels on an uneven road without executing the routine shown in Fig. 8, the motor 2 generates a constant torque even in the event of a slip of the wheel 1. Therefore, a rotational speed of the wheel 1 is increased abruptly when the wheel 1 slips. In this situation, specifically, the reaction torque applied from the road surface to the slipping wheel 1 in the direction to reduce the rotational speed of the wheel 1 is reduced abruptly by a reduction in the friction force acting between the road surface and the wheel 1. Consequently, as indicated by the broken curve in Fig. 9, the rotational speed of the wheel 1 is increased abruptly when slips.

As described, when the wheel 1 slips, the friction force acting between the wheel 1 and the road surface is reduced thereby increasing a rotational speed of the wheel 1. Consequently, a rotational speed of the motor 2 connected to the slipping wheel 1 is increased. In this situation, an electromotive force in the motor 2 is increased and a voltage supplied to the motor 2 is reduced. That is, an electric current flowing through the motor 2 is reduced and hence the actual torque Tm_act generated by the motor 2 is reduced. Whereas, the inertia torque of the motor 2 is increased by an increase in the angular acceleration $d\theta m^{\wedge}2/dt^{\wedge}2$ of the motor 2. That is, the actual torque Tm_act generated by the motor 2 is reduced, but a change in the driveshaft torque Tds is increased by such increase in the inertia torque of the motor 2 resulting from the increase in the angular acceleration $d\theta m^{\wedge}2/dt^{\wedge}2$ of the motor 2. Thus, the driveshaft torque Tds is changed significantly when the wheel 1 slips. Therefore, a slip of the wheel 1 may be determined promptly by obtaining a difference between the driveshaft torque Tds and the torque acting on the driveshaft 6 in accordance with the command torque Tm_com. Consequently, an increase in a rotational speed of the wheel 1 may be prevented by restricting the torque of the motor 2 thereby reducing torsional vibrations on the driveshaft 6 and limiting damages on the parts. In addition, reduction in the torque delivered from the motor 2 to the wheel 1 may be prevented when the wheel 1 comes into contact with the ground again.

Thus, the difference between the driveshaft torque Tds and the torque acting on the driveshaft 6 in accordance with the command torque Tm_com may be employed as a parameter to determine a slip of the wheel 1. In addition, a change rate of the driveshaft torque Tds may also be employed as a parameter to determine a slip of the wheel 1. Therefore, in a situation where the driveshaft torque Tds is increased by accelerating or decelerating the vehicle Ve abruptly, a slip of the wheel 1 may be determined certainly without determining the abrupt acceleration or deceleration by other control. That is, a slip of the wheel 1 may be determined without fail only by the foregoing procedures. According to the exemplary embodiment of the present invention, therefore, the control for determining a slip of the wheel 1 may be simplified.

The slip determiner 15 is further configured to determine a slip (or free spin) of the wheel 1 based on a change rate of a torsional angle of the driveshaft 6 instead of the change rate $\Delta Tds/\Delta t$ of the driveshaft torque Tds. To this end, as illustrated in Fig. 10, signals are transmitted to the slip determiner 15 from the torque calculator 14 and a change rate calculator 24.

The change rate calculator 24 is configured to calculate a change rate of a torsional angle of the driveshaft 6. To this end, as illustrated in Fig. 11, the change rate calculator 24 comprises a differentiator 25, a multiplier 26, a subtractor 27, and a filter 28. Specifically, the differentiator 25 is configured to calculate a rotational speed $\omega m$ of the motor 2 by differentiating a rotational angle $\theta$ of the motor 2 detected by the resolver 10 with respect to time.

The multiplier 26 is configured to calculate an input speed to the driveshaft 6 by multiplying the rotational speed $\omega m$ of the motor 2 calculated by the differentiator 25 by an inverse of the gear ratio Gr of the reduction mechanism 7.

In order to calculate a change rate of a torsional angle of the driveshaft 6 based on a difference between an input speed and an output speed to/from the driveshaft 6, the subtractor 27 is configured to subtract a rotational speed of the wheel 1 detected by the wheel speed sensor 12 from the input speed to the driveshaft 6 calculated by the multiplier 26.

In order to remove a noise contained in the change rate $\omega ds$ of a torsional angle of the driveshaft 6 transmitted from the subtractor 27, as the aforementioned filter 19, the low-pass filter for gradually reducing a higher frequency content than a predetermined frequency may be adopted as the filter 28.

Specifically, the change rate calculator 24 calculates the change rate $\omega ds$ of a torsional angle of the driveshaft 6 using the following formula (6)

$$\omega ds = \omega m \cdot 1/Gr - \omega w.$$

Then, the slip determiner 15 determines a slip (or free spin) of the wheel 1 based on the driveshaft torque Tds calculated by the torque calculator 14 and the change rate $\omega ds$ of a torsional angle of the driveshaft 6 calculated by the change rate calculator 24. Specifically, the slip determiner 15 determines a slip of the wheel 1 upon the satisfaction of both of the above-mentioned inequality (2)

$$| Tm\_com \cdot Gr - Tds | > A,$$

and
the following inequality (7)

$$| \omega ds | > E.$$

In the above inequality (7), "E" is a threshold for determining an increase in the change rate of a torsional angle of the driveshaft 6 resulting from a slip of the wheel 1. The threshold E as another predetermined change rate of the exemplary embodiment of the present invention may be a fixed value set based on e.g., an experimental result. Alternatively, the threshold E may also be a variable which varies in accordance with the command torque Tm_com and a speed of the vehicle Ve. For example, the threshold E may be set to a value greater than a change rate of a torsional angle of the driveshaft 6 in the situation where the vehicle Ve is accelerated or decelerated abruptly.

The slip determiner 15 is further configured to determine that the wheel 1 spinning freely comes into contact with the ground again upon the satisfaction of both of the above-mentioned inequality (4)

$$| \text{Tm\_com} \cdot \text{Gr-Tds} | < C,$$

and the following inequality (8)

$$| \omega \text{ds} | > F.$$

In the above inequality (8), "F" is a threshold for determining that the wheel 1 spinning freely comes into contact with the ground again. The threshold F may be a fixed value set based on e.g., an experimental result. Alternatively, the threshold F may also be a variable which varies in accordance with the command torque Tm_com and a speed of the vehicle Ve. In addition, the threshold F may be set to a value smaller than the threshold E employed in the inequality (7).

Thus, the change rate $\omega$ds of a torsional angle of the driveshaft 6 may also be employed as a parameter to determine a slip of the wheel 1 instead of the change rate $\Delta$Tds/$\Delta$t of the driveshaft torque Tds. In this case, a slip of the wheel 1 may also be determined certainly in the situation where the vehicle Ve is accelerated or decelerated abruptly without determining the abrupt acceleration or deceleration by other control. Therefore, the control for determine a slip of the wheel 1 may be simplified.

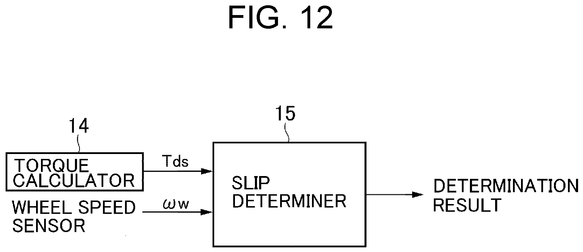

The slip determiner 15 is further configured to determine a slip (or free spin) of the wheel 1 based on a change rate of a wheel speed $\omega$w as an angular acceleration of the wheel 1, instead of the change rate $\Delta$Tds/$\Delta$t of the driveshaft torque Tds and the change rate $\omega$ds of a torsional angle of the driveshaft 6. To this end, as illustrated in Fig. 12, signals are transmitted to the slip determiner 15 from the torque calculator 14 and the wheel speed sensor 12.

In this case, the slip determiner 15 determines a slip (or free spin) of the wheel 1 based on the driveshaft torque Tds calculated by the torque calculator 14 and the wheel speed $\omega$w detected by the wheel speed sensor 12. Specifically, the slip determiner 15 determines a slip of the wheel 1 upon the satisfaction of both of the above-mentioned inequality (2)

$$| \text{Tm\_com} \cdot \text{Gr-Tds} | > A,$$

and the following inequality (9)

$$| \Delta \omega \text{w}/\Delta \text{t} | > G.$$

In the above inequality (9), "G" is a threshold for determining an increase in the change rate of a wheel speed $\omega$w (i.e., an angular acceleration) resulting from a slip of the wheel 1. The threshold G as a predetermined angular acceleration of the exemplary embodiment of the present invention may be a fixed value set based on e.g., an experimental result. Alternatively, the threshold G may also be a variable which varies in accordance with the command torque Tm_com and a speed of the vehicle Ve. For example, the threshold G may be set to a value greater than a change rate of a torsional angle of the driveshaft 6 in the situation where the vehicle Ve is accelerated or decelerated abruptly. On the other hand, $\Delta \omega$w/$\Delta$t is a value obtained by dividing a difference between: a wheel speed $\omega$w(n-1) detected in a previous operation cycle; and a wheel speed $\omega$w(n) detected in a current operation cycle, by the operation cycle $\Delta$t.

The slip determiner 15 is further configured to determine that the wheel 1 spinning freely comes into contact with the ground again upon the satisfaction of both of the above-mentioned inequality (4)

$$| \text{Tm\_com} \cdot \text{Gr-Tds} | < C,$$

and the following inequality (10)

$$| \Delta \omega \text{w}/\Delta \text{t} | < H.$$

In the above inequality (10), "H" is a threshold for determining that the wheel 1 spinning freely comes into contact with the ground again. The threshold H may be a fixed value set based on e.g., an experimental result. Alternatively, the threshold H may also be a variable which varies in accordance with the command torque Tm_com and a speed of the vehicle Ve. In addition, the threshold H may be set to a value smaller than the threshold F employed in the inequality (9).

Thus, the change rate $\Delta \omega$w/$\Delta$t of a wheel speed $\omega$w may also be employed as a parameter to determine a slip of the wheel 1 instead of the change rate $\Delta$Tds/$\Delta$t of the driveshaft torque Tds and the change rate $\omega$ds of a torsional angle of the driveshaft 6. In this case, a slip of the wheel 1 may also be determined certainly in the situation where the vehicle Ve is accelerated or decelerated abruptly without determining the abrupt acceleration or deceleration by other control. Therefore, the control for determine a slip of the wheel 1 may be simplified.

Although the above exemplary embodiments of the present invention have been described, it will be understood by those skilled in the art that the present invention should not be limited to the foregoing exemplary embodiments, and various changes and modifications may be made within the scope of the present invention. For example, the control system according to the exemplary embodiment of the present disclosure may also be applied to a parallel-type hybrid vehicle in which any one of pairs of wheels is driven by an engine and the other pair of wheels is driven by a motor, and a series-type hybrid vehicle in which a power generated by an engine is translated into an electric power by a generator and drive wheels are driven by supplying the electric power to a motor. That is, the control system according to the exemplary embodiment of the present disclosure may be applied to any kind of vehicles in which the drive wheel is connected mechanically to a motor. In addition, the driveshaft torque Tds may also be detected directly by arranging a torque sensor on the driveshaft.

**Claims**

1. A control system for an electric vehicle (Ve) having a motor (2Rf, 2Lf, 2Rr, 2Lr) serving as a prime mover, a driveshaft (6) connected to the motor (2Rf, 2Lf, 2Rr, 2Lr), and a wheel (1Rf, 1Lf, 1Rr, 1Lr) connected to one end of the driveshaft (6),
**characterized by**:

   a controller (13) that controls the motor (2Rf, 2Lf, 2Rr, 2Lr), comprising
   a torque calculator (14) that is configured to calculate a driveshaft torque (Tds) acting on the driveshaft (6), and
   a slip determiner (15) that is configured to determine a slip of the wheel (1Rf, 1Lf, 1Rr, 1Lr) when a value obtained by subtracting the driveshaft torque (Tds) from a torque delivered to the driveshaft (6) from the motor (2Rf, 2Lf, 2Rr, 2Lr) in accordance with a command torque (Tm_com) for controlling the motor (2Rf, 2Lf, 2Rr, 2Lr) is greater than a predetermined torque (A).

2. The control system for the electric vehicle (Ve) as claimed in claim 1, wherein the torque calculator (14) is further configured to calculate the driveshaft torque (Tds) based on a value obtained by subtracting an inertia torque of the motor (2Rf, 2Lf, 2Rr, 2Lr) from an actual torque (Tm_act) generated by the motor (2Rf, 2Lf, 2Rr, 2Lr).

3. The control system for the electric vehicle (Ve) as claimed in claim 1, wherein the slip determiner (15) is further configured to determine the slip of the wheel (1Rf, 1Lf, 1Rr, and 1Lr) when a change rate ($\Delta Tds/\Delta t$) of the driveshaft torque (Tds) is greater than a predetermined change rate (B).

4. The control system for the electric vehicle (Ve) as claimed in claim 1, wherein the slip determiner (15) is further configured to determine a slip of the wheel (1Rf, 1Lf, 1Rr, and 1Lr) when a change rate ($\omega ds$) of a torsional angle of the driveshaft (6) is greater than another predetermined change rate (E).

5. The control system for the electric vehicle (Ve) as claimed in claim 1, wherein the slip determiner (15) is further configured to determine a slip of the wheel (1Rf, 1Lf, 1Rr, 1Lr) when an angular acceleration ($\omega w$) of the wheel (1Rf, 1Lf, 1Rr, 1Lr) is greater than a predetermined angular acceleration (G).

6. The control system for the electric vehicle (Ve) as claimed in claim 2, further comprising:

   an ammeter (11) that measures an electric current flowing through the motor (2Rf, 2Lf, 2Rr, 2Lr),
   wherein the torque calculator (14) is further configured to calculate the actual torque (Tm_act) generated by the motor (2Rf, 2Lf, 2Rr, 2Lr) based on a current value of the electric current measured by the ammeter (11).

7. The control system for the electric vehicle (Ve) as claimed in claim 2, further comprising:

   a sensor (10) that detects a rotational angle ($\theta m$) of the motor (2Rf, 2Lf, 2Rr, 2Lr),
   wherein the torque calculator (14) is further configured to calculate the inertia torque of the motor (2Rf, 2Lf, 2Rr, 2Lr) based on: an angular acceleration ($d\theta m^{\wedge}2/dt^{\wedge}2$) of the motor (2Rf, 2Lf, 2Rr, 2Lr) calculated based on the rotational angle ($\theta m$) of the motor (2Rf, 2Lf, 2Rr, 2Lr) detected by the sensor (10); and an inertia moment (Im) of the motor (2Rf, 2Lf, 2Rr, 2Lr).

8. The control system for the electric vehicle (Ve) as claimed in any of claims 1 to 7, wherein the controller (13) further comprises:

   a limit torque calculator (16) that is configured to calculate a limit command torque (Tm_com_lim) for controlling the motor (2Rf, 2Lf, 2Rr, 2Lr) to generate a torque possible to restrict an angular acceleration ($\omega w$) of the wheel (1Rf, 1Lf, 1Rr, and 1Lr) to be equal or less than a limit angular acceleration; and
   a command torque selector (17) that is configured to select the limit command torque (Tm_com_lim) calculated by the limit torque calculator (16) as the command torque (Tm_com) for controlling the motor (2Rf, 2Lf, 2Rr, 2Lr) when the slip determiner (15) determines the slip of the wheel (1Rf, 1Lf, 1Rr, 1Lr).

9. The control system for the electric vehicle (Ve) as claimed in claim 8, wherein the limit torque calculator (16) comprises:

   an angular acceleration selector (21) that is configured to select smaller one of an actual angular acceleration ($\omega w$) of the wheel (1Rf, 1Lf, 1Rr, 1Lr) and the limit angular acceleration; and
   a feedback controller (23) that is configured to calculate the limit command torque (Tm_com_lim) based on a difference between: a target rotational speed of the wheel (1Rf, 1Lf, 1Rr, 1Lr) calculated based on the smaller one ($\omega$w) of the angular accelerations selected by the angular acceleration selector (21); and an actual rotational speed of the wheel (1Rf, 1Lf, 1Rr, 1Lr).

# FIG.1

# FIG. 2

# FIG. 3

# FIG. 4

# FIG. 5

# FIG. 6

ACTUAL WHEEL SPEED → **DIFFERENCE CALCULATOR** (20) → **ANGULAR ACCELERATION SELECTOR** (21) → **INTEGRATOR** (22) → TARGET WHEEL SPEED → **FEEDBACK CONTROLLER** (23) → Tm_com_lim

LIMIT ANGULAR ACCELERATION → ANGULAR ACCELERATION SELECTOR (21)

16

EP 4 620 718 A1

# FIG. 7

15

SLIP
DETERMINER

Tm_com_req ⟶

Tm_com_lim ⟶

COMMAND
TORQUE
SELECTOR

⟶ Tm_com

17

# FIG. 8

START

CALCULATE Tds — S1

S2 — WHEEL SLIPPING? — NO

YES

S4 — CALCULATE TARGET WHEEL SPEED

S5 — CALCULATE Tm_com_lim

S6 — Tm_com=Tm_com_lim

S3

Tm_com=Tm_com_req

END

# FIG. 9

# FIG. 10

# FIG. 11

# FIG. 12

Europäisches
Patentamt

European
Patent Office

Office européen
des brevets

# EUROPEAN SEARCH REPORT

**Application Number**

EP 25 15 5839

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/101428 A1 (ITOH TAKAO [JP]) 23 April 2009 (2009-04-23) | 1,2,6-8 | INV. B60L3/10 B60L15/20 B60W20/00 |
| Y | * paragraphs [0036], [0042] - [0051]; figures 1, 2, 4 * | 3-5,9 | |
| Y | US 2023/159036 A1 (CHO WOO CHEOL [KR] ET AL) 25 May 2023 (2023-05-25) | 3-5 | |
| A | * paragraphs [0033] - [0063]; figures 1, 2 * | 1,2,6-9 | |
| A | US 2007/038340 A1 (SEKIGUCHI HIDEKI [JP] ET AL) 15 February 2007 (2007-02-15) * paragraphs [0087] - [0092], [0106] - [0145]; figures 1, 6, 10-14 * | 1-9 | |
| Y | US 2014/309826 A1 (TALJA MARKKU [FI]) 16 October 2014 (2014-10-16) | 9 | |
| A | * paragraphs [0021] - [0039]; figures 1-3 * | 1-8 | |

TECHNICAL FIELDS
SEARCHED        (IPC)

B60L
B60W

The present search report has been drawn up for all claims

| Place of search | Date of completion of the search | Examiner |
|---|---|---|
| The Hague | 21 July 2025 | Bronski, Bartlomiej |

EPO FORM 1503 03.82 (P04C01)

**EP 4 620 718 A1**

## ANNEX TO THE EUROPEAN SEARCH REPORT
## ON EUROPEAN PATENT APPLICATION NO.

EP 25 15 5839

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2025

| Patent document cited in search report | | Publication date | Patent family member(s) | | Publication date |
|---|---|---|---|---|---|
| US 2009101428 | A1 | 23-04-2009 | EP | 2070760 A1 | 17-06-2009 |
| | | | JP | 4306770 B2 | 05-08-2009 |
| | | | JP | 2008113541 A | 15-05-2008 |
| | | | US | 2009101428 A1 | 23-04-2009 |
| | | | WO | 2008041624 A1 | 10-04-2008 |
| US 2023159036 | A1 | 25-05-2023 | KR | 20230077820 A | 02-06-2023 |
| | | | US | 2023159036 A1 | 25-05-2023 |
| US 2007038340 | A1 | 15-02-2007 | CN | 1911706 A | 14-02-2007 |
| | | | EP | 1752332 A2 | 14-02-2007 |
| | | | JP | 4188348 B2 | 26-11-2008 |
| | | | JP | 2007049825 A | 22-02-2007 |
| | | | US | 2007038340 A1 | 15-02-2007 |
| US 2014309826 | A1 | 16-10-2014 | EP | 2792531 A1 | 22-10-2014 |
| | | | US | 2014309826 A1 | 16-10-2014 |

EPO FORM P0459

For more details about this annex : see Official Journal of the European Patent Office, No. 12/82

**EP 4 620 718 A1**

**Patent documents cited in the description**

- JP 2024025240 A
- JP 2008064037 A
- JP 2020145863 A

- JP 2021167139 A
- JP 2008 A
- JP 64037 A